# EUROPÄISCHE PATENTSCHRIFT

(11) **EP 2 212 173 B1**
(45) Veröffentlichungstag und Bekanntmachung des Hinweises auf die Patenterteilung: **20.03.2013**
(21) Anmeldenummer: 08852444.2
(22) Anmeldetag: 22.10.2008
(51) Int. Cl.: B60W 10/06, B60W 10/08, B60W 20/00, B60W 10/02, B60K 6/365, B60K 6/48, B60W 50/08

(54) **VERFAHREN ZUR BESTIMMUNG DES ISTZUSTANDES EINES HYBRIDANTRIEBSSTRANGS**
METHOD FOR DETERMINING THE ACTUAL STATE OF A HYBRID DRIVE TRAIN
PROCÉDÉ DE DÉTERMINATION DE L'ÉTAT RÉEL D'UNE CHAÎNE DE TRANSMISSION HYBRIDE

(30) Priorität: 20.11.2007 DE 102007047818
(43) Veröffentlichungstag der Anmeldung: 04.08.2010
(73) Patentinhaber: ZF Friedrichshafen AG, 88038 Friedrichshafen (DE)
(72) Erfinder: KALTENBACH, Johannes, 88048 Friedrichshafen (DE); WALLNER, Stefan, A-5163 Mattsee (AT)
(86) Internationale Anmeldenummer: PCT/EP2008/064234
(87) Internationale Veröffentlichungsnummer: WO 2009/065688

(56) Entgegenhaltungen:
- EP-A- 1 839 987
- WO-A-02/26520
- US-A1- 2003 098 187
- US-A1- 2003 183 431
- US-A1- 2004 159 183
- US-A1- 2006 048 988

## Beschreibung

Die vorliegende Erfindung bezieht sich auf ein Verfahren zur Bestimmung des Istzustandes eines Hybridantriebsstrangs eines parallelen Hybridfahrzeugs als Information für die Hybrid-Betriebsstrategie bzw. die strategische Schicht der Hybridsteuerung gemäß dem Oberbegriff des Patentanspruchs 1.

Aus dem Stand der Technik sind Hybridfahrzeuge umfassend ein Hybridgetriebe bekannt. Sie umfassen zusätzlich zu dem Verbrennungsmotor zumindest einen Elektromotor bzw. eine elektrische Maschine. Bei seriellen Hybridfahrzeugen wird ein Generator vom Verbrennungsmotor angetrieben, wobei der Generator den die Räder antreibenden Elektromotor mit elektrischer Energie versorgt. Des Weiteren sind parallele Hybridfahrzeuge bekannt, bei denen eine Addition der Drehmomente des Verbrennungsmotors und zumindest einer mit dem Verbrennungsmotor verbindbaren elektrischen Maschine erfolgt. Hierbei sind die elektrischen Maschinen mit dem Riementrieb oder mit der Kurbelwelle des Verbrennungsmotors verbindbar. Die vom Verbrennungsmotor und/oder der zumindest einen elektrischen Maschine erzeugten Drehmomente werden über ein nachgeschaltetes Getriebe an die angetriebene Achse übertragen.

Aufgabe einer Hybrid-Betriebsstrategie bei Hybridfahrzeugen ist die Vorgabe eines Betriebsmodus und die Verteilung des Fahrerwunschmoments bzw. der Fahrerwunschleistung auf den Verbrennungsmotor und die zumindest eine Elektromaschine, wenn Verbrennungsmotor und Elektromaschine wirkverbunden sind bzw. wenn bei Hybridsystemen mit einem integrierten Starter/Generator alle Kupplungen haften.

Aus dem Stand der Technik sind Hybridfahrzeuge bekannt, die eine Hybridsteuerung aufweisen, die in mindestens zwei Funktionsschichten unterteilt ist, wobei die eine Schicht (strategische Schicht) die strategischen Funktionen bzw. quasistationäre Vorgaben hinsichtlich Zustände und kontinuierlicher Größen und die zweite Schicht (operative Schicht) die operativen Funktionen bzw. dynamische Übergänge umfasst.

Hierbei ist wichtig, dass der Istzustand des Hybridantriebsstrangs des Fahrzeugs als abstrakte Information für die Strategie vorliegt. Nach dem Stand der Technik weist die Strategie bzw. die strategische Schicht eine eigene Istzustandbestimmung auf, wobei in nachteiliger Weise vorkommen kann, dass der über diese Istzustandbestimmung ermittelte Istzustand nicht dem Antriebsstrang-Istzustand der operativen Schicht (Steuerungsebene) entspricht, so dass Umschaltzeitpunkte schwierig zu koordinieren sind.

In dem gattungsbildenden Dokument WO02/26520A ist ein Verfahren beschrieben, bei welchem in einer Pedalinterpretation aus einer den Fahrerwunsch charakterisierenden Größe ein Drehmomentsollwert ermittelt wird und in einer Fahrer- und Situationserkennung Betriebsgrößen des Fahrzeugs ausgewertet und klassifiziert werden. Abhängig von dem Drehmoment-Sollwert und von den Ausgangssignalen der Fahrer- und Situationserkennung wird in einem Zustandsmanager ein Soll-Betriebszustand des Antriebsstrangs festgelegt. In einem Drehmomentmanager werden schließlich abhängig von dem Drehmoment-Sollwert und vom Soll-Betriebszustand Steuersignale für dezentrale Steuereinheiten der Antriebsaggregate und des Getriebes erzeugt.

In der US2003/0098187A1 ist eine Steuerstrategie für die Ausführung eines Parallelhybrid-Elektrofahrzeuges beschrieben, mit der Leistung von dem Verbrennungsmotor und dem Motor jeweils unabhängig voneinander ein Drehmoment auf den Antriebsstrang des Fahrzeugs bereitstellen kann. Die Steuerstrategie besitzt eine logische Struktur, die Betriebsarten (Zustände) des Hauptsystems und den Übergang zwischen den unterschiedlichen Zuständen bestimmt. Neben den vorbestimmten Zuständen werden Regeln angegeben, die logische Beziehungen zwischen jedem der mehreren vorbestimmten Zustände und eine Menge von für jeden Zustand einzigartigen Anweisungen definieren. Diese Anweisungen werden Reglern eines Teilsystems zugeführt, um eine gewünschte Funktionalität des Fahrzeugs zu erzielen.

In der US2006/0048988A1 st ein Verfahren zur Bestimmung der Antriebsleistungsverteilung in einem Hybrid-Antriebsstrang eines Fahrzeugesbeschrieben. Hierbei wird durch ein von der aktuellen dynamischen oder ökonomischen Fahrweise des Fahrers abhängiger Soll-Ladezustand eines Energiespeichers sowie der aktuelle Betriebsfall des Antriebsstranges in Abhängigkeit von dem Soll-Ladezustand bestimmt. Weiter wird die elektrisch mögliche Soll-Antriebsleistung für die wenigstens eine Elektromaschine in Abhängigkeit vom Soll-Ladezustand und dem aktuellen Betriebsfall des Antriebsstranges bestimmt. Schließlich wird die Soll-Antriebsleistung für die Brennkraftmaschine und die wenigstens eine Elektromaschine in Abhängigkeit von der elektrisch möglichen Soll-Antriebsleistung bestimmt.

Der vorliegenden Erfindung liegt die Aufgabe zugrunde, ein Verfahren zur Bestimmung des Istzustandes eines Hybridantriebsstrangs eines parallelen Hybridfahrzeugs als Information für die Hybrid-Betriebsstrategie bzw. die strategische Schicht der Hybridsteuerung anzugeben, durch dessen Durchführung der Istzustand des Hybridantriebsstrangs auf einfache Weise korrekt abgebildet wird.

Diese Aufgabe wird durch die Merkmale des Patentanspruchs 1 gelöst.

Demnach wird vorgeschlagen, dass ausgehend vom Istzustand des Hybridantriebsstrangs ein abstrakter Strategie-Istzustand als Information für die Hybrid-Betriebsstrategie bzw. die strategische Schicht der Hybridsteuerung gebildet wird, wobei jeder Istzustand des Hybridantriebsstrangs eindeutig einem Strategie-Istzustand zugeordnet wird und aus den Istzuständen des Hybridantriebsstrangs die Strategie-Istzustände "Elektrisches Fahren - Verbrennungsmotor aus", "Elektrisches Fahren - Verbrennungsmotor ein", "Hybridfahren" und "Laden" gebildet werden.

Hierbei wird im Rahmen des erfindungsgemäßen Verfahrens im gebildeten Strategie-Istzustand die Information für die Strategie abstrahiert, sodass die Anzahl der gebildeten Strategie-Istzustände geringer ist, als die Anzahl der Istzustände des Hybridantriebsstrangs.

Beispielsweise umfasst das Hybridfahrzeug einen Verbrennungsmotor und zumindest eine Elektromaschine, die in dieser Reihenfolge hintereinander geschaltet sind, wobei der Verbrennungsmotor durch Öffnen einer Kupplung K1 von der elektrischen Maschine und somit vom Antriebsstrang abkoppelbar ist und wobei der Getriebeeingang mittels einer zweiten optionalen Kupplung K2 mit dem Abtrieb der Elektromaschine bzw. eines Summierungsgetriebes, in dem die Momente der Elektromaschine und des Verbrennungsmotors aufsummiert werden, lösbar verbindbar ist. Für den Fall dass keine Kupplung K2 vorgesehen ist, wird er Kraftfluss zum Abtrieb hin allein durch das Getriebe (Gang eingelegt/Neutralstellung) bestimmt.

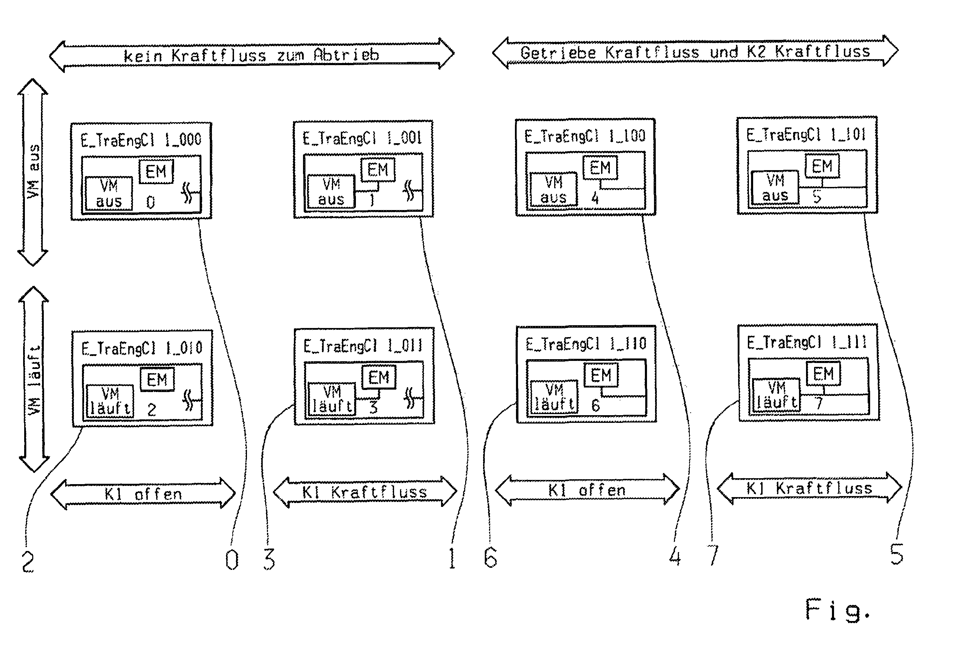

Im Folgenden wird eine beispielhafte Ausgestaltung des erfindungsgemäßen Verfahrens anhand der beigefügten Figur, welche die möglichen Istzustände eines Hybridantriebsstrangs umfassend eine Kupplung K1 und eine Kupplung K2 darstellt, erläutert. Für den Fall, dass keine Kupplung K2 zwischen Elektromaschine und Getriebe vorgesehen ist, ist die Elektromaschine permanent mit dem Getriebe verbunden.

In der Figur sind die möglichen Istzustände eines Hybridantriebsstrangs eines parallelen Hybridfahrzeugs dargestellt, umfassend einen Verbrennungsmotor VM und zumindest eine Elektromaschine EM, die in dieser Reihenfolge hintereinander geschaltet sind, wobei der Verbrennungsmotor durch Öffnen einer Kupplung K1 von der elektrischen Maschine und somit vom Antriebsstrang abkoppelbar ist und wobei der Getriebeeingang mittels einer zweiten Kupplung K2 mit dem Abtrieb der Elektromaschine bzw. eines Summierungsgetriebes, in dem die Momente der Elektromaschine und des Verbrennungsmotors aufsummiert werden, lösbar verbindbar ist.

In der Figur ist mit 0 der Istzustand des Hybridantriebsstrangs bezeichnet, bei dem bei ausgeschaltetem Verbrennungsmotor beide Kupplungen K1, K2 offen sind, so dass kein Kraftfluss zum Abtrieb bzw. zum Getriebeeingang vorhanden ist, wobei der Verbrennungsmotor von der Elektromaschine bzw. vom Antriebsstrang abgekoppelt ist, wobei der Zustand, bei dem bei ausgeschaltetem Verbrennungsmotor die Kupplung K1 geschlossen ist und die Kupplung K2 offen ist (Verbrennungsmotor ist mit der Elektromaschine verbunden, wobei der Kraftfluss zum Abtrieb bzw. zum Getriebeeingang unterbrochen ist) mit 1 bezeichnet ist.

Ferner ist in der Figur mit 4 der Zustand bezeichnet, bei dem bei ausgeschaltetem Verbrennungsmotor die Kupplung K1 offen und die Kupplung K2 geschlossen ist; mit 5 ist der Zustand bezeichnet, bei dem bei ausgeschaltetem Verbrennungsmotor die Kupplungen K1 und K2 geschlossen sind. Mit 2 ist der Zustand bezeichnet, bei dem bei angelassenem Verbrennungsmotor beide Kupplungen K1, K2 offen sind, so dass kein Kraftfluss zum Abtrieb bzw. zum Getriebeeingang vorhanden ist, wobei mit 3 der Zustand bezeichnet wird, bei dem bei dem bei angelassenem Verbrennungsmotor die Kupplung K1 geschlossen ist und die Kupplung K2 offen ist, so dass der Verbrennungsmotor mit der Elektromaschine verbunden ist, wobei der Kraftfluss zum Abtrieb bzw. zum Getriebeeingang unterbrochen ist; in diesem Zustand wird die Elektromaschine mittels des Verbrennungsmotors geladen. Das Getriebe kann die Schaltstellung "Neutral" aufweisen. Für den Fall, dass keine Kupplung K2 vorgesehen ist, weist das Getriebe die Schaltstellung "Neutral" auf.

Bei dem mit 6 bezeichneten Zustand ist bei angelassenem Verbrennungsmotor die Kupplung K1 offen und die Kupplung K2 geschlossen, so dass der Getriebeeingang mit der Elektromaschine verbunden ist, wobei der Verbrennungsmotor von der Elektromaschine bzw. vom Antriebsstrang abgekoppelt ist; des weiteren ist mit 7 der Zustand des Hybridantriebsstrangs bezeichnet, bei dem bei angelassenem Verbrennungsmotor die Kupplungen K1 und K2 geschlossen sind, sodass der Verbrennungsmotor mit dem Antriebsstrang verbunden ist und der Kraftfluss zum Getriebeeingang nicht unterbrochen ist. Bei diesem Zustand ist im Getriebe ein Gang eingelegt.

Aus den möglichen Istzuständen des Hybridantriebsstrangs werden die Strategie-Istzustände "Elektrisches Fahren - Verbrennungsmotor aus", "Elektrisches Fahren - Verbrennungsmotor ein", "Hybridfahren" und "Laden" gebildet, wobei den Istzuständen des Hybridantriebsstrangs 0, 1, 4 und 5 der Strategie-Istzustand "Elektrisches Fahren - Verbrennungsmotor aus" und den Istzuständen des Hybridantriebsstrangs 2, 6 der Strategie-Istzustand "Elektrisches Fahren - Verbrennungsmotor ein" zugeordnet wird. Ferner wird dem Istzustand des Hybridantriebsstrangs 7 der Strategie-Istzustand "Hybridfahren" und dem Istzustand des Hybridantriebsstrangs 3 der Strategie-Istzustand "Laden" zugeordnet.

Hierbei ist der Umschaltzeitpunkt bei Zustandswechseln des Antriebsstrang-Istzustands und des Strategie-Istzustands immer gleich.

Durch die erfindungsgemäße Konzeption wird ein Verfahren zur Bestimmung des Istzustandes eines Hybridantriebsstrangs eines parallelen Hybridfahrzeugs als Information für die Hybrid-Betriebsstrategie bzw. die strategische Schicht der Hybridsteuerung zur Verfügung gestellt, zu dessen Durchführung keine aufwändige Funktion und kein Zustandsgraph benötigt wird.

Des weiteren ist die im erfindungsgemäß gebildeten Strategie-Istzustand die Information für die Strategie abstrahiert, sodass auf Strategieebene weniger Detailwissen über den Aufbau des Antriebsstrangs erforderlich ist.

## Patentansprüche

1. Verfahren zur Bestimmung des Istzustandes eines Hybridantriebsstrangs eines parallelen Hybridfahrzeugs mit einem Verbrennungsmotor und zumindest einer Elektromaschine, die in dieser Reihenfolge hintereinander geschaltet sind, als Information für die Hybrid-Betriebsstrategie bzw. die strategische Schicht der Hybridsteuerung, wobei ausgehend vom Istzustand des Hybridantriebsstrangs ein abstrakter Strategie-Istzustand als Information für die Hybrid-Betriebsstrategie bzw. die strategische Schicht der Hybridsteuerung gebildet wird, wobei jeder Istzustand des Hybridantriebsstrangs eindeutig einem Strategie-Istzustand zugeordnet wird, wobei aus den Istzuständen des Hybridantriebsstrangs die Strategie-Istzustände "Elektrisches Fahren - Verbrennungsmotor aus", "Elektrisches Fahren - Verbrennungsmotor ein", "Hybridfahren" und "Laden" gebildet werden, **dadurch gekennzeichnet,**
- **dass** den Istzuständen des Hybridantriebsstrangs bei denen, der Verbrennungsmotor ausgeschaltet ist der Strategie-Istzustand "Elektrisches Fahren - Verbrennungsmotor aus" zugeordnet wird,
- **dass** den Istzuständen des Hybridantriebsstrangs, bei denen der Verbrennungsmotor angelassen ist und vom Antriebsstrang abgekoppelt ist der Strategie-Istzustand "Elektrisches Fahren - Verbrennungsmotor ein" zugeordnet wird,
- **dass** dem Istzustand des Hybridantriebsstrangs, bei dem der Verbrennungsmotor angelassen und mit dem Antriebsstrang verbunden ist, wobei eine optionale Kupplung K2, mittels welcher der Getriebeeingang mit dem Abtrieb der Elektnomaschine lösbar verbindbar ist, geschlossen ist und im Getriebe ein Gang eingelegt ist der Strategie-Istzustand "Hybridfahren" zugeordnet wird und
- **dass** dem Istzustand des Hybridantriebsstrangs, bei dem bei angelassenem Verbrennungsmotor eine Kupplung K1, durch deren Öffnen der Verbrennungsmotor von der elektrischen Maschine und somit vom Antriebsstrang abkoppelbar ist, geschlossen ist und die optionale Kupplung K2 offen ist und/oder das Getriebe die Schaltstellung "Neutral" aufweist der Strategie-Istzustand "Laden" zugeordnet wird.

## Claims

1. The method for determining the actual state of a hybrid drive train of a parallel hybrid vehicle having an internal combustion engine and at least one electric machine which are connected in series in this sequence, as information for the hybrid operating strategy or the strategic layer of the hybrid control, wherein an abstract strategy actual state is formed, on the basis of the actual state of the hybrid drive train, as information for the hybrid operating strategy or the strategic layer of the hybrid control, wherein each actual state of the hybrid drive train is unambiguously assigned to a strategy actual state, wherein the strategy actual states of "electric travel - internal combustion engine off", "electric travel - internal combustion engine on", "hybrid travel" and "charging" are formed from the actual states of the hybrid drive train, **characterized in that** the actual states of the hybrid drive train in which the internal combustion engine is switched off are assigned the strategy actual state of "electric travel - internal combustion engine off",
- **in that** the actual states of the hybrid drive train in which the internal combustion engine is started and is decoupled from the drive train are assigned the strategy actual state of "electric travel - internal combustion engine on",
- **in that** the actual state of the hybrid drive train in which the internal combustion engine is started and is connected to the drive train, wherein an optional clutch K2, by means of which the transmission input is detachably connected to the output of the electric machine, is closed and a gear speed is engaged in the transmission, is assigned the strategy actual state of "hybrid travel", and
- **in that** the actual state of the hybrid drive train in which a clutch K1, as a result of the opening of which the internal combustion engine can be decoupled from the electric machine and therefore from the drive train, is closed with the internal combustion engine started and the optional clutch K2 is open and/or the transmission is in the "neutral" gearshift position is assigned the strategy actual state of "charging".

## Revendications

1. Procédé pour déterminer l'état actuel d'une chaîne de transmission hybride d'un véhicule hybride parallèle comprenant un moteur à combustion interne et au moins une machine électrique qui sont montés l'un derrière l'autre dans cet ordre, en tant qu'information pour la stratégie de fonctionnement hybride ou pour la couche stratégique de commande hybride, dans lequel, partant de l'état actuel de la chaîne de transmission hybride, un état actuel de stratégie abstrait est formé en tant qu'information pour la stratégie de fonctionnement hybride ou la couche stratégique de commande hybride, dans lequel chaque état actuel de la chaîne de transmission hybride est univoquement associé à un état actuel de stratégie, dans lequel, à partir des états actuels de la chaîne de transmission hybride, les états actuels de stratégie "conduite électrique - moteur à combustion interne éteint", "conduite électrique - moteur à combustion interne allumé", "conduite hybride" et "charge" sont formés, **caractérisé en ce que**
- les états actuels de la chaîne de transmission hybride, dans lesquels le moteur à combustion interne est éteint sont associés à l'état actuel de stratégie "conduite électrique - moteur à combustion interne éteint",
- les états actuels de la chaîne de transmission hybride dans lesquels le moteur à combustion interne est mis en marche et est désaccouplé de la chaîne d'entraînement sont associés à l'état actuel de stratégie "conduite électrique - moteur à combustion interne allumé",
- l'état actuel de la chaîne de transmission hybride dans lequel le moteur à combustion interne est mis en marche et est connecté à la chaîne de transmission, où un embrayage optionnel K2, au moyen duquel l'entrée de la boîte de vitesses peut être connectée de manière déconnectable à une prise de force de la machine électrique, est fermé et une vitesse est enclenchée dans la boîte de vitesses, est associé à l'état actuel de stratégie "conduite hybride" et
- l'état actuel de la chaîne de transmission hybride dans lequel lorsque le moteur à combustion interne est mis en marche, un embrayage K1, dont l'ouverture désaccouple le moteur à combustion interne de la machine électrique et donc de la chaîne de transmission, est fermé et l'embrayage optionnel K2 est ouvert, et/ou la boîte de vitesses présente la position de commutation "neutre", est associé à l'état actuel de stratégie "charge".
